# EUROPÄISCHE PATENTSCHRIFT

(11) **EP 1 855 610 B1**
(45) Veröffentlichungstag und Bekanntmachung des Hinweises auf die Patenterteilung: **30.07.2014**
(21) Anmeldenummer: 06707164.7
(22) Anmeldetag: 22.02.2006
(51) Int. Cl.: A61C 8/00

(54) **ZWEITEILIGES ZAHNIMPLANTATSYSTEM**
TWO-PART DENTAL IMPLANT SYSTEM
SYSTEME D'IMPLANT DENTAIRE COMPORTANT DEUX PARTIES

(30) Priorität: 22.02.2005 DE 102005008273
(43) Veröffentlichungstag der Anmeldung: 21.11.2007
(73) Patentinhaber: Mundorf, Sönke, 22087 Hamburg (DE)
(72) Erfinder: Mundorf, Sönke, 22087 Hamburg (DE)
(74) Vertreter: Eisenführ Speiser
(86) Internationale Anmeldenummer: PCT/EP2006/001599
(87) Internationale Veröffentlichungsnummer: WO 2006/089728

(56) Entgegenhaltungen:
- WO-A-01/34056
- WO-A-2004/103203
- WO-A-2005/013846
- WO-A-2005/120386
- WO-A2-2005/007012
- US-A- 3 797 113
- US-A- 4 997 383
- US-A- 6 024 567
- US-A1- 2003 157 459
- US-A1- 2004 185 418

## Beschreibung

Die Erfindung betrifft ein Zahnimplantat mit einem im Kieferknochen verankerbaren Knochenverankerungsteil mit einer Außenfläche zur Verankerung im Kieferknochen und einem an dem Knochenverankerungsteil befestigbaren Zahnaufbauteil, an dem eine Krone befestigbar ist. Die Erfindung kann optional als Zahnimplantat mit einem im Kieferknochen verankerbaren Knochenverankerungsteil mit einer ersten Fläche zur Verankerung im Kieferknochen und einer zweiten Fläche zur Befestigung einer Krone ausgeführt sein.

Zahnimplantate der vorgenannten Art sind bekannt und werden in der zahnärztlichen Therapie verwendet, um einen oder mehrere erkrankte oder fehlende Zähne vollständig zu ersetzen. Diese Zahnimplantate können insbesondere im kosmetisch relevanten Bereich, also im sichtbaren Vorder- und Seitenzahnbereich eingesetzt werden, eignen sich jedoch auch für ästhetisch anspruchsvolle Behandlungen im weniger sichtbaren Backenzahnbereich. Zahnimplantate der vorgenannten Art werden auch als Halteapparat für herausnehmbaren Zahnersatz verwendet. Schließlich dienen diese Zahnimplantate zum Teil auch dem kosmetischen Zweck, das ästhetische Erscheinungsbild störende Zähne zu ersetzen.

Zur Implantation der Zahnimplantate wird in einem ersten Schritt ein Knochenverankerungsteil im Kieferknochen primär verankert. Zum Erzielen dieser primären Verankerung hat es sich durchgesetzt, am Knochenverankerungsteil ein Außengewinde vorzusehen, das in den Knochen eingeschraubt wird. Das typischerweise aus Titanwerkstoffen gefertigte Knochenverankerungsteil wird so weit in den Knochen eingeschraubt, dass es bündig mit der Knochenoberfläche liegt und folglich nicht mehr sichtbar ist. Aufgrund der vollständigen Versenkung des Knochenverankerungsteils in den Knochen ist keine weitere Bearbeitung des Knochenverankerungsteils möglich oder erforderlich.

In einem zweiten Schritt wird am Knochenverankerungsteil ein Zahnaufbauteil befestigt, an dem eine Krone oder ein herausnehmbarer Zahnersatz befestigt werden kann. Das Zahnaufbauteil wird als gerader oder abgewinkelter Aufbau bereitgestellt. Das Zahnaufbauteil wird üblicherweise mittels einer im Knochenverankerungsteil zu verschraubenden Schraube, die durch eine Öffnung des Zahnaufbauteils durchgeführt wird und deren Kopf einen Gegenhalt im Zahnaufbauteil findet, am Knochenverankerungsteil befestigt.

An dem Zahnaufbauteil wird in einem dritten Schritt eine dem ursprünglich vorhandenen Zahn oder einem üblicherweise an der behandelten Stelle vorhandenen Zahn in Geometrie und Farbe nachempfundene Krone oder ein herausnehmbarer Zahnersatz befestigt.

Zahnimplantate der vorgenannten Art sind beispielsweise unter der Bezeichnung FRIALIT® von der FRIADENT GmbH oder unter der Bezeichnung NOBELDIRECT™ und NOBELPERFECT™ von der Nobel Biocare AB, Schweden erhältlich, letztere sind in US 6,174,167, US 6,283,754, WO 2004/103203 und WO 2 005 013 846 beschrieben.

Ein wesentlicher Nachteil der bekannten Systeme ist das optische Erscheinungsbild des implantierten Zahnimplantats. Die Verbindung zwischen Knochenverankerungsteil und Zahnaufbauteil wird bei bekannten Implantaten regelmäßig mittels eines Gewindes erzielt, welches die Verwendung zugfester Materialien zur Erzielung der erforderlichen Festigkeit des Gesamtimplantats erfordert. Es hat sich daher durchgesetzt, das Knochenverankerungsteil und das Zahnaufbauteil aus Titan oder einer Titanlegierung herzustellen. Diese Materialrestriktion stellt ein Problem dar, da das dunkelgraue Titanmaterial zwar von der regelmäßig der Zahnfarbe angepassten Krone verdeckt wird, sich in vielen Fällen jedoch postoperativ das Zahnfleisch etwas zurückbildet. Manchmal kann das Implantat aufgrund verschiedener Umstände nicht ideal platziert werden. Diese beiden Phänomene führen zu einem die Ästhetik beeinträchtigenden dunklen Saum zwischen Zahn und Zahnfleisch, der von dem freiliegenden Titanwerkstoff verursacht wird. Bei einem solchen postoperativen Verlauf treten demnach selbst bei den für den kosmetischen Bereich ausgebildeten zweiteiligen Zahnimplantaten die ästhetischen Nachteile auf, die bereits von den Zahnimplantaten für den nicht-sichtbaren Bereich bekannt sind.

Weiterhin ist die Materialrestriktion selbst bei idealer Implantatplatzierung und idealem postoperativem Heilungsverlauf ein Problem, da der Titanwerkstoff durch den Knochen und das Zahnfleisch durchschimmern kann und so die "rote Ästhetik" massiv stören kann.

Bekannte Zahnimplantate weisen darüberhinaus den Nachteil auf, dass sich in vielen Fällen ein Mikrospalt subgingival im Übergang zwischen dem Knochenverankerungsteil und dem Zahnaufbauteil ausbildet, der als Reservoir für Keime dient. Es ist bekannt, dass solche Keimreservoire multiple Probleme nach sich ziehen können, insbesondere Zahnfleisch-Kieferknochenerkrankungen (Periimplantitis oder Parodontitis) und Erkrankungen der umliegenden Zähne.

Eine andere Art von Implantaten, die sich für den nicht-sichtbaren Bereich, also den Bereich der Backenzähne, eignet, verzichtet auf eine vollständige Versenkung des Knochenverankerungsteils in den Knochen. Bei diesen Zahnimplantaten sind Knochenverankerungsteil und Zahnaufbauteil so ausgebildet, dass der Knochenverankerungsteil aus dem Knochen und dem Zahnfleisch herausragt. Das Knochenverankerungsteil dieser Implantate ermöglicht und erfordert keine präparatorische Nachbearbeitung durch den Zahnarzt. Eine Anpassung an den individuellen Zahnfleischverlauf ist an dem Knochenverankerungsteil weder möglich noch für das angestrebte Endergebnis erforderlich.

Diese Implantate benötigen zwar keinen zusätzlichen Bearbeitungsaufwand am Knochenverankerungsteil und lassen sich daher im nicht-sichtbaren Bereich mit vertretbarem Behandlunsgaufwand einsetzen, sie eignen sich jedoch nicht für den kosmetisch sichtbaren Bereich, da das Knochenverankerungsteil nicht verdeckt wird und folglich ein die Ästhetik erheblich störender, dunkler Rand zwischen Krone und Zahnfleisch vorhanden ist.

Ein weiterer Nachteil alller bekannter Zahnimplantate ist der erhebliche Umfang des Instrumentariums und der Implantatteile, welche für die prothetische Behandlung erforderlich ist. Bekannte Zahnimplantate erfordern regelmäßig ein spezielles Instrumentarium zur labortechnischen Anpassung des Zahnersatzes an die anatomischen Verhältnisse des jeweiligen Patienten, sowie ein spezifisches Instrumentarium, mit dem der Zahnarzt die Verankerung im Kieferknochen vorbereitet und durchführt und mit dem der Zahnarzt die einzelnen Teile des Implantatsystems im Mund des Patienten ausrichtet, befestigt und in Form bringt.

Schließlich ist ein weiteres Problem der bekannten Zahnimplantate, dass eine zunehmende Anzahl von Patienten auf metallische Werkstoffe, wie Titan, sehr sensibel oder allergisch reagiert, u.a. bedingt durch die Verbreitung durch die Haut implantierter, metallischer Schmuckstücke. Bei diesen Patienten kann es zu Abstoßungsreaktionen metallischer Implantate kommen, die erhebliche Probleme in der Nachbehandlung verursachen, was zu der Notwendigkeit der Implantatentnahme führen kann. Weiterhin werden immunologische Probleme durch Metallionen und Korrosionsprobleme durch lokale galvanische Elemente diskutiert.

Neben den vorstehend beschriebenen, sogenannten "zweiteiligen" Implantaten, welche tatsächlich meist mehr als zwei Teile aufweisen, sind auch sogenannte "einteilige" Implantate bekannt, bei denen ein Knochenverankerungsteil so ausgebildet ist, dass eine Krone bzw. ein herausnehmbarer Zahnersatz direkt daran befestigt werden kann. Bei diesen einteiligen Implantaten ist das Zahnaufbauteil und das Knochenverankerungsteil einstückig ausgeführt.

Einteilige Implantate haben gegenüber zweiteiligen Implantaten regelmäßig den Nachteil, dass die Ausrichtung des Knochenverankerungsteils nicht mittels eines entsprechend abgewinkelten Zahnaufbauteils in einer solchen Weise ausgeglichen werden kann, dass die Krone derart ausgerichtet werden kann, dass ein optimales Erscheinungsbild und ein optimales Bissmuster erreicht wird.

Ein Zahnimplantat gemäß dem Oberbegriff des Anspruchs 1 ist aus der US 20 030 157 459 bekannt.

Der Erfindung liegt die Aufgabe zugrunde, ein Zahnimplantat bereitzustellen, welches sich für die Implantation im kosmetisch relevanten Bereich eignet und zumindest eines, vorzugsweise mehrere der vorgenannten Probleme vermeidet oder zumindest verringert.

Diese Aufgabe wird durch ein Zahnimplantat gemäß dem Anspruch 1 gelöst.

Unter einer Ausbildung als Gewebeverankerungsteil soll hierbei verstanden werden, dass das zur Knochenverankerung dienende Teil des Zahnimplantats auch ausgebilldet ist, um im Bereich des Bindegewebes, also des Zahnfleischs eine zusätzliche Verankerung zu finden. Das erfindungsgemäße Gewebeverankerungsteil muss daher nicht vollständig in den Knochen versenkt werden. Beim erfindungsgemäßen Zahnimplantat ist das Gewebeverankerungsteil also ausgebildet zur Integration in den Knochen und in das den Knochen bedeckende Bindegewebe (das Zahnfleisch). Unter bindegewebiger Integration ist in diesem Zusammenhang zu verstehen, dass eine direkte Anlagerung des Bindegewebes an die Implantatoberfläche oberhalb des Knochens stattfindet.

Das Gewebeverankerungsteil des erfindungsgemäßen Zahnimplantats muss weiterhin so ausgebildet sein, dass es vom Zahnarzt an die individuelle anatomische Situation durch Präparation anpassbar ist. Hierdurch kann das Gewebeverankerungsteil vom Zahnarzt beispielsweise so bearbeitet werden, dass eine Verdeckung des aus dem Gewebe herausragenden Bereichs mit der Krone oder dem Zahnaufbauteil erzielt wird und somit auch den ästhetischen Ansprüchen im sichtbaren Bereich Rechnung getragen wird. Zu diesem Zweck ist einerseits eine für die Bearbeitung mit dem vorgesehenen Instrumentarium geeignete Materialwahl der Zahnimplantatteile erforderlich. Eine solche Anpassung erfolgt insbesondere durch Beschleifung oder Zerspanung des Gewebeverankerungsteils und des Zahnaufbauteils. Daher ist die Geometrie so zu wählen, dass eine materialentfernende Bearbeitung möglich ist. Auf diese Weise erlaubt und erfordert das erfindungsgemäße Zahnimplantat eine Bearbeitung des Gewebeverankerungsteils und ermöglicht somit einen anatomisch angepassten und den ästhetischen Anforderungen genügenden Zahnersatz.

Das Zahnaufbauteil des erfindungsgemäßen Zahnimplantats kann als gerader oder angewinkelter Aufbau ausgebildet sein. Das Zahnaufbauteil kann eine zylindrische Befestigungsfläche für die Krone haben. Alternativ kann diese Befestigungsfläche konisch sein, beispielsweise mit einem Konuswinkel von 5 Grad. Das Zahnaufbauteil kann alternativ hierzu mit einem Kugelknopfaufbau zur Befestigung von herausnehmbaren Zahnersatz versehen sein.

Es ist insbesondere bevorzugt, dass das Gewebeverankerungsteil und das Zahnaufbauteil so ausgebildet sind, dass zumindest ein außenseitiger Abschnitt des Übergangs zwischen Gewebeverankerungsteil und Zahnaufbauteil im implantierten Zustand äqui- und/oder supragingival liegt.

Das so fortgebildete erfindungsgemäße Zahnimplantat hat den Vorteil, dass der sich gegebenfalls ausbildende Mikrospalt zumindest teilweise in einem Bereich zu liegen kommt, der nicht durch Zahnfleisch verdeckt wird. Die Gefahr, dass sich Erreger in diesem Mikrospalt festsetzen, kann dadurch erheblich verringert werden, da der Mikrospalt regelmäßig von der Krone verdeckt wird und selbst dann, wenn er nicht verdeckt wird, bei der täglichen Zahnhygiene (mit Zahnbürste o.ä.) erreicht werden kann. Dabei interessiert hier nur der außenseitige Bereich des Übergangs, also der Übergang im Bereich der Außenfläche des Implantats, da sich hier der Mikrospalt zum Mundraum hin öffnet und so als Keimreservoir dienen kann.

Unter äquigingivaler Lage ist hierbei eine fluchtende Anordnung des Abschnitts des Mikrospalts mit der Zahnfleischgrenze zur Mundhöhle zu verstehen. Unter supragingivaler Lage ist hierbei eine Anordnung des Abschnitts des Mikrospalts oberhalb der Zahnfleischgrenze zur Mundhöhle zu verstehen, also in der Mundhöhle.

Unter implantierten Zustand ist hier der unmittelbar postoperative Zustand zu verstehen. In vielen Fällen, jedoch nicht immer, zieht sich das Zahnfleisch noch im weiteren Heilungsverlauf etwas zurück (Retraktion), sodass eine zunächst äquigingivale Lage des Mikrospalts im Heilungsverlauf supragingival werden kann. Erfindungsgemäß wird angestrebt, dass der Mikrospalt im endgültigen, ausgeheilten und stabilen Zustand äqui- oder etwas supragingival liegt, je nach ästhetischen Anforderungen.

Es ist besonders bevorzugt, wenn das Gewebeverankerungsteil und das Zahnaufbauteil so ausgebildet sind, dass der linguale und/oder der bukkale Abschnitt des außenseitigen Übergangs zwischen Gewebeverankerungsteil und Zahnaufbauteil im implantierten Zustand äqui- und/oder supragingival liegt.

Oftmals ist es auch vorteilhaft, wenn das Gewebeverankerungsteil und das Zahnaufbauteil so ausgebildet sind, dass der zu den Nachbarzähnen weisende Abschnitt des außenseitigen Übergangs zwischen Gewebeverankerungsteil und Zahnaufbauteil im implantierten Zustand äqui- und/oder supragingival liegt. Diese beiden Abschnitte weisen zum Zahnzwischenraum, in dem sich oftmals Keime und Erreger gut aufhalten können und nur bei intensiver Zahnhygiene mit Zahnseide o.ä. entfernt werden können. Es ist daher vorteilhaft, wenn im Bereich der Zahnzwischenräume ein sich gegebenfalls ausbildender Mikrospalt keine zusätzlichen Nistzonen für solche Keime darstellt, sondern dieser Mikrospalt von der Krone verdeckt oder gut zu reinigen ist.

Schließlich ist es vorteilhaft, wenn das Gewebeverankerungsteil und das Zahnaufbauteil so ausgebildet sind, dass der gesamte außenseitige Übergang zwischen Gewebeverankerungsteil und Zahnaufbauteil im implantierten Zustand äqui- und/oder supragingival liegt. Bei dieser Lösung ist der gesamte Mikrospalt von der Krone verdeckt und der Kronenrand gut für die tägliche Pflege zugänglich.

Eine erfindungsgemäße Ausführungsform zeichnet sich durch eine am Gewebeverankerungsteil und/oder am Zahnaufbauteil ausgebildete Kronenrandaufnahmefläche aus, welche ausgebildet ist, um die in die Krone eingeleiteten Kaukräfte auf das Gewebeverankerungsteil bzw. das Zahnaufbauteil weiterzuleiten. Diese Implantatschulter ermöglicht eine definitive Positionierung der Krone und eine besonders günstige Einleitung der Kaukräfte in das Implantat.

Dabei ist es bevorzugt, wenn die Kronenrandaufnahmefläche ringförmig entlang des Umfangs des Gewebeverankerungsteils bzw. des Zahnaufbauteils ausgebildet ist und in axialer Richtung zum Mundraum weist. Eine solche ringförmige Ausgestaltung ist für den Zahnarzt gut nachzuarbeiten und erlaubt eine besonders günstige Wandstärke der Krone im Bereich des Übergangs zum Zahnaufbauteil und im Bereich der Kronenrandaufnahmefläche.

Vorzugsweise liegt die Kronenrandaufnahmefläche zumindest teilweise, oder vollständig im implantierten Zustand äqui- bzw. supragingival. Mit dieser Ausführungsform kann der Übergangsspalt zwischen Krone und Implantat in einem hygienisch bevorzugten Bereich angeordnet werden und zudem eine gute Bearbeitbarkeit der Kronenrandaufnahmefläche durch den Zahnarzt, auch bei minimalinvasiver Operationstechnik, ermöglicht werden.

Die Kronenrandaufnahmefläche ist vorzugsweise am Gewebeverankerungsteil ausgebildet und liegt mit dem außenseitigen Übergang zwischen Gewebeverankerungsteil und Zahnaufbauteil auf einer Höhe. Diese Ausführungsform ist besonders bevorzugt, da hierbei sowohl eine gute Bearbeitung möglich ist, als auch eine günstige Anordnung des Mikrospaltes sowie eine gute Einleitung der Kaukräfte in das Implantat bereitgestellt wird.

Eine weitere erfindungsgemäße Fortbildung zeichnet sich durch eine erste Verdrehsicherung zur rotationsgesicherten Befestigung des Zahnaufbauteils an dem Gewebeverankerungsteil und eine zweite Verdrehsicherung zur rotationsgesicherten Befestigung der Krone an dem Zahnaufbauteil aus. Auf Zahnimplantate wirken beim Kauvorgang erheblich torsionale Kräfte, die neben dem Implantatbett auch die Verbindungsbereiche des Implantats selbst beanspruchen. Es ist zur Aufnahme dieser torsionalen Kräfte vorteilhaft, wenn eine Verdrehsicherung der zuvor beschriebenen Weise bereitgestellt wird, vorzugsweise durch ein formschlüssiges Zusammenwirken der beiden gegen Verdrehung gegeneinander gesicherten Implantatteile.

Ein weiterer Aspekt der Erfindung ist ein Zahnimplantat wie zuvor oder wie eingangs beschrieben, bei dem das Gewebeverankerungsteil und das Zahnaufbauteil mittels eines sich in Längsrichtung des einen Teils erstreckenden Schaftes, in den ein am anderen Teil ausgebildetes Schwert einsetzbar ist, miteinander verbunden sind. Diese erfindungsgemäße Befestigung des Zahnaufbauteils an dem Gewebeverankerungsteil ermöglicht eine freizügigere Materialwahl und daher eine bessere ästhetische Gestaltung des Zahnersatzes. So werden erfindungsgemäß keramische Werkstoffe für beide Teile verwendet.

Das Schwert kann verschiedene Querschnitte, beispielsweise verrundet oder abgeflacht eckige Ellipsenform, drei- oder mehreckige Formen, stern- oder kleeblattförmige Form aufweisen. Vorzugsweise, aber nicht zwingend haben Schwert und Schaft geometrisch übereinstimmende Querschnittsflächen, die jedoch in den Abmessungen unterschiedlich voneinander sein können. Insbesondere ist es bevorzugt, wenn Schwert und Schaft einen viereckigen, vorzugsweise quadratischen Querschnitt aufweisen, so dass der die Prothese benutzende Zahnarzt die Wahl hat, das Gewebeverankerungsteil und das Zahnaufbauteil in zwei bzw. vier Ausrichtungen zueinander miteinander zu verbinden. Dies erlaubt es, das erfindungsgemäße Zahnimplantat an spezifische anatomische oder operative Gegebenheiten anzupassen.

Dabei können das Gewebeverankerungsteil und das Zahnaufbauteil insbesondere durch zementierte Verankerung des Schwertes in dem Schaft miteinander verbindbar sein. Unter einer Zementierung soll in diesem Zusammenhang verstanden werden, dass ein vorstehender Abschnitt des einen Teils in einen Hohlraum des anderen Teils eingeführt wird und hierbei zwischen dem vorstehendem Abschnitt und dem Hohlraum ein möglichst allseitiger Spalt verbleibt. In diesem Spalt ist ein vor dem Zusammenfügen der Teile aufgetragener Zement angeordnet, der im flüssigem oder pastösem Zustand aufgetragen wird und nach Aushärtung vorzugsweise durch Übertragung adhäsiver und kohäsiver Kräfte die beiden Teile fest zusammenhält. Insbesondere kann auch ein Zusammenhalt der beiden Teile durch Reibkrafterhöhung mittels des Zementes erreicht werden. Weiterhin hat die zementierte Verankerung den erheblichen Vorteil, dass der Mikrospalt mit Zement aufgefüllt wird.

Der Schaft kann vorzugsweise in einer Querschnittsebene senkrecht zu seiner Erstreckung einen von einem kreisrunden Querschnitt abweichenden Querschnitt aufweisen, vorzugsweise einen ellipsenförmigen Querschnitt. Auf diese Weise wird zwischen den verbundenen Bauteilen ein Formschluss erzielt, der eine Verdrehsicherung bereitstellt. Weiterhin kann auf diese Weise die Orientierung des Zahnimplantats im Kieferknochen eindeutig festgelegt werden und folglich eine Fehlermöglichkeit bei der Implantation ausgeschlossen werden.

Insbesondere kann der Schaft in der Querschnittsebene in einer ersten Richtung, die sich im implantierten Zustand zwischen den beidseitigen Nachbarzähnen des Implantats erstreckt, eine größere Abmessung haben als in einer senkrecht dazu gelegenen zweiten Richtung, die sich in einer bukko-lingualen Richtung erstreckt. Diese Dimensionierung des Schaftes passt sich in besonders günstiger Weise an die übliche äußere Kontur der menschlichen Zähne an und ermöglicht einerseits eine besonders günstige Verdrehsicherung und andererseits auch eine ausreichende Materialstärke an jeder Stelle des Zahnimplantats, um den in der täglichen Belastung auftretenden Beanspruchungen gerecht zu werden.

Erfindungsgemäß ist der Schaft am Gewebeverankerungsteil und das Schwert am Zahnaufbauteil ausgebildet. Dies ermöglicht eine gute Dimensionierung der Wandstärken am Zahnaufbauteil und erlaubt darüber hinaus, dass das Gewebeverankerungsteil mit Hilfe eines in den Schaft eingebrachten Instrumentes besonders gut in den Kieferknochen hineingebracht werden kann.

Ein weiterer Aspekt der Erfindung ist ein Zahnimplantat, wie zuvor oder wie eingangs beschrieben, bei dem das Gewebeverankerungsteil und das Zahnaufbauteil aus einem keramischen Material, insbesondere aus Zirkonoxid, bestehen. Keramische Materialien und insbesondere Zirkonoxid weisen einerseits vorteilhafte ästhetische Eigenschaften auf, da sie oftmals in der Farbgebung ohnehin dem natürlichen Zahn stark ähneln und durch leichte Modifikationen hinsichtlich der Farbe an die natürlichen Zähne angepasst werden können. Andererseits ist die Biokompatibilität von keramischen Materialien hervorragend und es kann durch Auswahl unter einer Vielzahl von keramischen Materialien gezielt eine biointegrative und eine bioinerte Funktion erreicht werden. Dabei bieten keramische Materialien, insbesondere Zirkonoxid, hervorragende mechanische Eigenschaften für diesen speziellen Einsatz, da sie über eine hohe Härte und hohe Festigkeit verfügen, um ein lebenslangen Zahnersatz bereitzustellen. Diese Ausführungsform kann vorzugsweise nach einem oder mehreren Merkmalen von einer der vorgehenden vorteilhaften Ausführungsformen weiter fortgebildet werden.

Ein weiterer Aspekt der Erfindung ist ein Zahnimplantat, wie zuvor oder wie eingangs beschrieben, bei dem das Zahnaufbauteil ein erstes Verankerungsteil mit einem Befestigungsmittel zur Befestigung am Knochenverankerungsteil und mit einer Befestigungsfläche zur Befestigung einer modellierbaren Masse, und ein zweites Teil umfasst, das durch Befestigung, Modellierung und Aushärtung einer vom Zahnarzt oder Zahntechniker plastisch verformbaren, modellierbaren Masse an der Befestigungsfläche herstellbar ist. Dieses Zahnimplantat weist den Vorteil auf, dass die in den Mundraum ragende Außenkontur des Zahnaufbauteils einfach aus einem Rohmaterial individuell modellierbar ist, also durch plastische Verformung, insbesondere durch additiven Materialauftrag. Das Rohmaterial kann vorzugsweise ein Komposit sein.

Weiterhin kann die der Erfindung zu Grunde liegende Aufgabe mit einem einteiligen Zahnimplantat der eingangs genannten Art gelöst werden mit einer am Gewebeverankerungsteil ausgebildeten Kronenrandaufnahmefläche, welche ausgebildet ist, um die in die Krone eingeleiteten Kaukräfte auf das Zahnaufbauteil bzw. das Gewebeverankerungsteil weiterzuleiten. Dabei ist die die Kronenrandaufnahmefläche vorzugsweise ausgebildet, wie bereits zuvor beschrieben.

Insbesondere ist es bevorzugt, wenn eine Verdrehsicherung zur rotationsgesicherten Befestigung der Krone an dem Gewebeverankerungsteil bereitgestellt ist. Auf diese Weise wird zuverlässig verhindert, dass sich die Krone um das Gewebeverankerungsteil dreht. ,

Die Fläche zur Verankerung im Kieferknochen ist mit einem Gewinde als einer die primäre Knochenverankerung fördernden Makrostruktur versehen. Eine solche Struktur kann durch ein ein- oder mehrgängiges Gewinde bereitgestellt werden, welches geometrisch in bekannter Weise für die Verankerung in Knochenmaterialien ausgebildet ist.

Neben der die primäre Knochenverankerung fördernden makroskopischen Struktur sollte die Fläche zur Knochenverankerung eine die Osseointegration fördernde Oberflächenstruktur aufweisen. Dies kann beispielsweise durch substraktive Maßnahmen (Sandstrahlung, Ätzung u.a.) oder durch additive Maßnahmen (z.B. Beschichtungen) hergestellt werden.

Vorzugsweise ist das zuvor oder das eingangs beschriebene Zahnimplantat fortgebildet mit einem am Gewebeverankerungsteil und/oder am Zahnaufbauteil ausgebildeten Bindegewebsabschnitt für die Anlagerung von Zahnfleischgewebe, der eine Oberflächenstruktur aufweist, die für die Bindegewebsintegration förderlich ist. Dieser Bindegewebsabschnitt ermöglicht eine besonders effiziente und stabile Anlagerung von Bindegewebe an die Implantatoberfläche und erleichtert somit einen speicheldichten Wundverschluss nach Implantation und eine dauerhafte knöcherne und bindegewebige Integration des Implantats. Der Bindegewebsabschnitt kann durch eine Beschichtung des Grundmaterials oder eine Modifikation des Grundmaterials, wie beispielsweise eine Ätzung oder ein anderer Abtragvorgang, hergestellt werden

Dabei ist es bevorzugt, wenn der Bindegewebsabschnitt nicht mit der die primäre Knochenverankerung fördernden Struktur versehen ist.

Insbesondere ist es bevorzugt, dass der Bindegewebsabschnitt eine etwa zylindrische oder konische Außenfläche aufweist. Unter etwa zylindrisch soll hier ein Konuswinkel von +/-8°, vorzugsweise +2° verstanden werden.

Weiterhin kann der Bindegewebeabschnitt eine aufgerauhte Oberflächenstruktur aufweisen. So kann der Bindegewebeabschnitt mit einer Oberflächenrauhigkeit versehen werden, wie sie durch Glasperlenstrahlen, Glasmehlstrahlen, Ätzung oder additive Maßnahmen erzielbar ist, um die Weichgewebsanlagerung weiter zu verbessern.

Eine weiterer Aspekt des erfindungsgemäßen Zahnimplantats besteht in mindestens einer Rotationsmarkierung an dem Gewebeverankerungsteil und/oder gegebenenfalls an dem Zahnaufbauteil, die während des Implantationsvorgangs eine Beurteilung der Rotationsausrichtung des Gewebeverankerungsteils bzw. des Zahnaufbauteils um die Implantatlängsachse ermöglicht. Eine solche Rotationsmarkierung ermöglicht es dem Labortechniker und dem Zahnarzt, die Implantationslage des Implantats eindeutig hinsichtlich der Rotation zu bestimmen.

Weiterhin ist es ein Aspekt der Erfindung, mindestens eine Tiefenmarkierung an dem Gewebeverankerungsteil bereitzustellen, die während des Implantationsvorgangs eine Beurteilung der Implantationstiefe des Gewebeverankerungsteils ermöglicht. Eine solche Tiefenmarkierung ermöglicht es, dass bei der Implantation die Implantationstiefe des Implantats beurteilt werden kann und erleichtert somit die richtige Platzierung des Zahnimplantats.

Dabei können vorzugsweise mehrere voneinander beabstandete Tiefenmarkierungen an dem Gewebeverankerungsteil vorhanden sein, von denen eine Tiefenmarkierung unterschiedlich zu den anderen Tiefenmarkierungen ausgebildet ist und diese Tiefenmarkierung die Nulllinie des Implantats kennzeichnet. Diese Fortbildung ermöglicht es, die Implantationstiefe differenzierter zu beurteilen und genau zu kontrollieren.

Unter Nulllinie eines Implantats ist hierbei diejenige Linie zu verstehen, an die sich zur Implantatspitze hin der in den Knochen implantierte Bereich anschließt. Dabei ist zu beachten, dass der Knochen im Kieferbereich meist einen wellenförmigen Verlauf hat, wodurch sich keine klare horizontalliegende Knochengrenze am Implantat ergibt, sondern vielmehr eine in der Art einer Girlande verlaufenden Knochengrenze ausbildet. Unterhalb der Nulllinie liegt daher nicht unmittelbar ausschließlich Knochen am Implantat an, sondern es befindet sich dort eine Mischzone von Bindegewebe und Knochen.

Weiterhin ist es vorteilhaft, mindestens eine Höhenmarkierung an dem Zahnaufbauteil bereitzustellen, die eine Beurteilung der Aufbauhöhe des Zahnaufbauteils ermöglicht. Eine solche Höhenmarkierung ermöglicht es, dass während der Behandlung die Höhe beurteilt wird, mit der das Zahnaufbauteil in die Mundhöhle ragt und erleichtert somit die richtige Anpassung des Zahnaufbauteils auch außerhalb des Mundraums.

Die vorgenannten Rotations-, Tiefen- oder Höhenmarkierungen können beispielsweise in Form einer kleinen Gravur, eines Farbstrichs, Farbpunktes oder einer sonstigen Ausprägung oder Erhebung ausgebildet sein. Insbesondere ist es bevorzugt diese Markierungen mittels eines Lasers, beispielsweise durch Lasergravur, aufzubringen.

Weiterhin ist es bevorzugt, wenn das Gewebeverankerungsteil und/oder gegebenenfalls das Zahnaufbauteil aus einem Material, insbesondere aus Zirkonoxid, besteht/bestehen welches eine spanende und/oder schleifende Bearbeitung mit dem Instrumentarium erlaubt, das auch zur Präparation von Zähnen in der zahnärztlichen Therapie benutzt wird. Diese Fortbildung weist den Vorteil auf, dass in der zahnärztlichen prothetischen Behandlung eine Bearbeitung mit dem üblichen Instrumentarium möglich ist. Durch diese Fortbildung kann nach Implantation des Gewebeverankerungsteils und gegebenenfalls Befestigung des Zahnaufbauteils die weitere Behandlung, insbesondere die Beschleifung, Abformung, Kronenbefestigung und Nachbearbeitung in gleicher Weise und mit dem gleichen Instrumentarium vorgenommen werden, wie es für die Behandlung natürlicher Zähne verwendet wird. Dies hat den Vorteil, dass jeder behandelnde Zahnarzt sein ihm vertrautes Instrumentarium mit der ihm vertrauten Behandlungstechnik bei der implantologischen Behandlung einsetzen kann. Weiterhin entfällt die Notwendigkeit umfangreicher Schulungsmaßnahmen für den Zahnarzt und den Zahntechniker, wie für herkömmliche Implantatsysteme erforderlich.

Die Fortbildung führt weiterhin zu dem entscheidenden Vorteil, dass der Zahnarzt die Teile des Implantats einfach selbst nachbearbeiten kann und demzufolge eine wesentlich bessere Ausrichtung und Platzierung der prothetischen Versorgung auf dem Zahnimplantat erreichen kann als bei solchen Implantaten, die nach der Fertigstellung im Labor keine weitere Nachbearbeitung ermöglichen. Die Bearbeitbarkeit in der zahnärztlichen Therapie ist dabei nicht darauf beschränkt, dass eine Zerspanung/Beschleifung mit den zahnärztlichen Instrumenten überhaupt grundsätzlich möglich ist, sondern betrifft auch die Forderung, dass die Bearbeitung mit dem zahnärztlichen Instrumentarium keine für den Patienten oder den behandelnden Arzt gefährliche Belastung darstellt, wie beispielsweise durch dabei entstehende Mikropartikel, Flüssigkeiten oder Gase oder durch physikalische Auswirkungen wie Wärmeentwicklung oder Vibration. Weiterhin kann das erfindungsgemäße Zahnimplantat fortgebildet werden, indem das Gewebeverankerungsteil und/oder gegebenenfalls das Zahnaufbauteil aus einem Material, insbesondere aus Zirkonoxid, besteht/bestehen, welches eine spanende und/oder schleifende Bearbeitung mit dem Instrumentarium erlaubt, das auch zur Bearbeitung von Zahnersatz in zahnärztlichen Laboren benutzt wird. Heutzutage wird in zahnärztlichen Laboren eine Vielzahl von Implantatteilen aus verschiedenen Materialien bearbeitet. Im Zuge von Kosteneinsparungen und von Verringerungen der Fehlermöglichkeit ist es wünschenswert, dass für diese Bearbeitung erforderliche Instrumentarium zu verringern. Das erfindungsgemäße Zahnimplantat kann daher dadurch fortgebildet werden, dass üblicherweise in der konventionellen Zahntherapie verwendete Materialien auch für dieses Zahnimplantat verwendet werden. Es ist insbesondere erfindungsgemäß vorteilhaft und auch erst durch die erfindungsgemäße Ausgestaltung des Zahnimplantats möglich, wenn alle Implantatteile aus einem Material bestehen, das mit dem selben Instrumentarium bearbeitet werden kann, um zu vermeiden, dass für einzelne Implantatteile ein spezifisches Instrumentarium benutzt werden muss, das für andere Implantateile nicht eingesetzt werden kann. Es ist daher insbesondere vorteilhaft, wenn das Gewebeverankerungsteil und gegebenenfalls das Zahnaufbauteil aus dem gleichen Material bestehen, zumindest aus einem Material, das eine Bearbeitung mit dem gleichen Instrumentarium ermöglicht.

Das erfindungsgemäße Zahnimplantat wird vorzugsweise mit Hilfe eines zahnärztlichen Bohrers implantiert, der einen Aufnahmeabschnitt zur Aufnahme des Bohrers in einem Bohrwerkzeug und einen Bohrabschnitt zur spanenden und/oder schleifenden Bearbeitung von Knochenmaterial und weiterhin eine erste Tiefenmarkierung, die am Aufnahme- oder Bohrabschnitt solcherart angeordnet ist, dass die richtige Bohrtiefe für einen korrekten Implantatsitz eines Implantats mit einer ersten Implantatlänge durch Fluchtung der ersten Tiefenmarkierung mit der Knochenoberfläche erzielt werden kann, umfasst, wobei eine zweite Tiefenmarkierung, die am Aufnahme- oder Bohrabschnitt solcherart angeordnet ist, dass die richtige Bohrtiefe für einen korrekten Implantatsitz des Implantats mit der ersten Implantatlänge durch Fluchtung der zweiten Tiefenmarkierung mit der Zahnfleischoberfläche erzielt werden kann, bereitgestellt ist. Der Bohrer zeichnet sich dadurch aus, dass er für die mit dem erfindungsgemäßen Zahnimplantat mögliche minimalinvasive Operationstechnik besonders geeignet ist, da er neben der Peilung über den Knochen mit Hilfe der ersten Tiefenmarkierung auch eine Peilung über das Zahnfleisch mit Hilfe der zweiten Markierung ermöglicht. Hierdurch ist die operative Darstellung des Knochen nicht erforderlich und es kann dennoch eine Bohrung mit der richtigen Tiefe vorgenommen werden.

Dabei ist es besonders bevorzugt, wenn mindestens eine weitere erste und mindestens eine weitere zweite Tiefenmarkierung am Aufnahme- oder Bohrabschnitt solcherart angeordnet sind, dass die richtige Bohrtiefe für einen korrekten Implantatsitz eines Implantats mit einer zweiten, von der ersten unterschiedlichen Implantatlänge durch Fluchtung der ersten oder der zweiten Tiefenmarkierung mit der Knochenoberfläche bzw. der Zahnfleischoberfläche erzielt werden kann. Hierdurch eignet sich der Bohrer auch für mehrere unterschiedliche Implantatlängen.

Weiterhin ist es bevorzugt, dass die erste(n) Tiefenmarkierung(en) mit einer weißen Farbe und die zweite(n) Tiefenmarkierung(en) mit einer roten Farbe markiert ist/sind. Diese Farbgebung ermöglicht eine direkte Assoziation zu dem anzupeilenden Gewebe, da die Farbgebung mit der Farbe des entsprechenden Gewebes übereinstimmt.

Eine bevorzugte Ausführungsform des erfindungsgemäßen Zahnimplantats wird anhand der Figuren beschrieben, es zeigen:
- Figur 1:: eine Explosionsdarstellung eines zweiteiligen Zahnimplantats gemäß der Erfindung,
- Figur 2:: eine Darstellung eines zweiteiligen Zahnimplantats im zusammengebauten Zustand,
- Figur 3:: eine Explosionsdarstellung einer ersten Ausführungsform eines einteiligen Zahnimplantats nicht gemäß der Erfindung,
- Figur 4:: eine Explosionsdarstellung einer zweiten Ausführungsform eines einteiligen Zahnimplantats nicht gemäß der Erfindung,
- Figur 5:: eine Draufsicht auf einen in einen Kieferknochen verankerten Gewebeverankerungsteil eines erfindungsgemäßen Zahnimplantats,
- Figur 6a,b:: eine Seitenansicht und Draufsicht auf das erfindungsgemäße Zahnimplantat mit typischen charakteristischen Abmessungen und
- Figur 7:: eine Seitenansicht eines Bohrers.

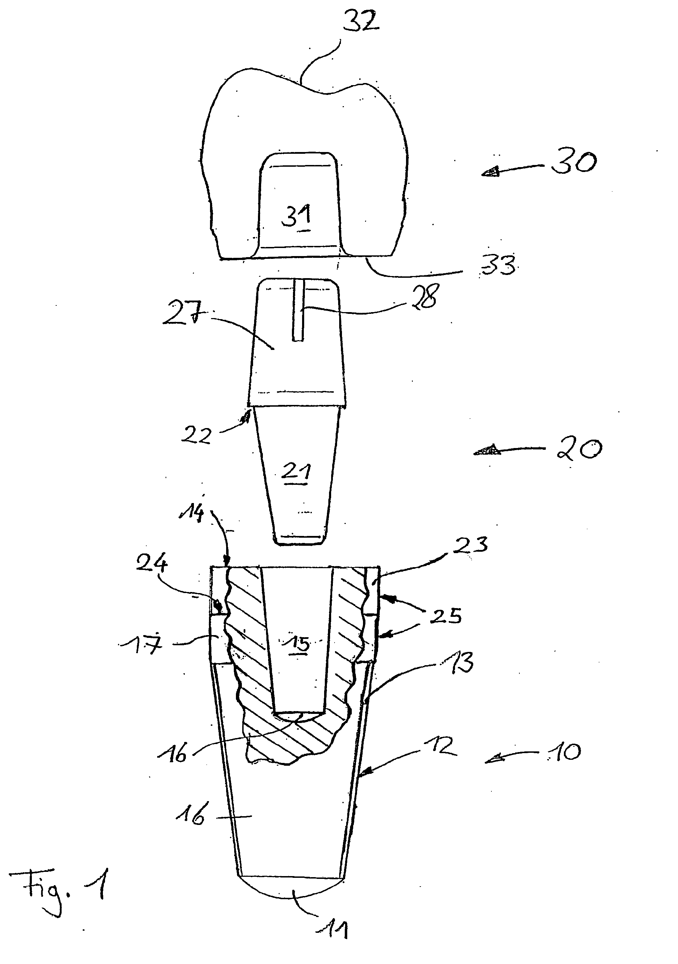

Figur 1 zeigt ein Zahnimplantat mit einem Gewebeverankerungsteil 10, einem Zahnaufbauteil 20 und einer Krone 30. Das Zahnimplantat ist dargestellt in einer Ausrichtung zur Implantation in den Unterkiefer und im Nachfolgenden wird auf diese Ausrichtung Bezug genommen. Gleichwohl ist zu verstehen, dass das Zahnimplantat in umgekehrter Weise, d.h. um eine horizontale Achse gespiegelt, ebenso in den Oberkiefer eingesetzt werden könnte.

Das Gewebeverankerungsteil 10 weist eine untere, in der Tiefe des Kieferknochens zum Liegen kommende verrundete Spitze 11 auf, an die sich eine nach oben sich konisch erweiternde, zylindrische Außenfläche 12 anschließt.

Die Außenfläche 12 ist im unteren Bereich mit einem Außengewinde 13 versehen, welches typischerweise eine Gewindetiefe von etwa 0,3mm aufweist. Im oberen Abschnitt weist das Gewebeverankerungsteil einen ebenfalls sich nach oben konisch erweiternden Bereich 17 auf, der als Mischgewebsanlagerungsbereich 25 ausgebildet ist und der als Anlagerungszone für ein Mischgewebe aus Knochen- und Bindegewebe dient.

An den sich nach oben konisch erweiternden Bereich 17 schließt sich nach oben ein zylindrischer Abschnitt 23 an, der eine im Durchmesser konstante Zylinderform hat und dessen Außenfläche ebenfalls als Bindegewebsanlagerungsbereich 25 ausgebildet ist, der als Anlagerungszone für Bindegewebe dient. Zwischen dem sich nach oben konisch erweiternden Bereich 17 und dem zylindrischen Abschnitt 23 ist eine Nulllinie 24 angeordnet.

Im oberen Bereich endet das Gewebeverankerungsteil mit einer planen Stirnfläche 14. In der planen Stirnfläche 14 ist ein Schwertschaft 15 angeordnet, der sich von der Stirnfläche 14 aus in Richtung der verrundeten Spitze 11 erstreckt. Der Schwertschaft 15 ist wiederum in der in Figur 1 dargestellten teilweise längsgeschnittenen Ansicht nach unten konisch zulaufend und endet im unteren Bereich mit einer verrundeten Schwertschaftspitze 16.

In den Schwertschaft 15 ist ein konisch zulaufendes Schwert 21 des Zahnaufbauteils 20 einführbar. Das Schwert 21 erstreckt sich von einer in Richtung des Gewebeverankerungsteils weisenden ringförmigen Stirnfläche 22 nach unten und bei Aufsetzen der Stirnfläche 22 auf der Stirnfläche 14 und des Knochenverankerungsstücks besteht zwischen der äußeren Oberfläche des Schwerts 21 und der inneren Oberfläche des Schwertschaftes 15 ein Spalt, in dem ein Zementmaterial (nicht dargestellt) angeordnet ist.

An das Schwert 21 schließt sich ein nach oben konisch zulaufendes Zapfenstück 27 an. Das Zapfenstück 27 weist einen Längsspalt 28 oder zwei senkrecht zueinander liegende Längsspalten auf, der als Rotationssicherung und -markierung zwischen dem Zahnaufbauteil 20 und der Krone 30 dient.

Auf das konisch zulaufende Zapfenstück 27 ist eine Krone 30 aufsetzbar, indem eine entsprechende konische Ausnehmung 31 der Krone über das Zapfenstück 27 geführt wird. Die Verbindung zwischen dem Zahnaufbauteil 20 und der Krone 30 kann in analoger Weise zur Verbindung des Schwertes 21 in dem Schwertschaft 15 mit Hilfe einer Zementierung erfolgen.

Die Krone 30 ist mit ihrer äußeren Kontur 32 gemäß den individuellen, anatomischen Anforderungen des Gebisses des Patienten geformt. Die untere Kronenrandfläche 33 stützt sich im Endzustand auf der Stirnfläche 14 des Gewebeverankerungsstücks 10 ab.

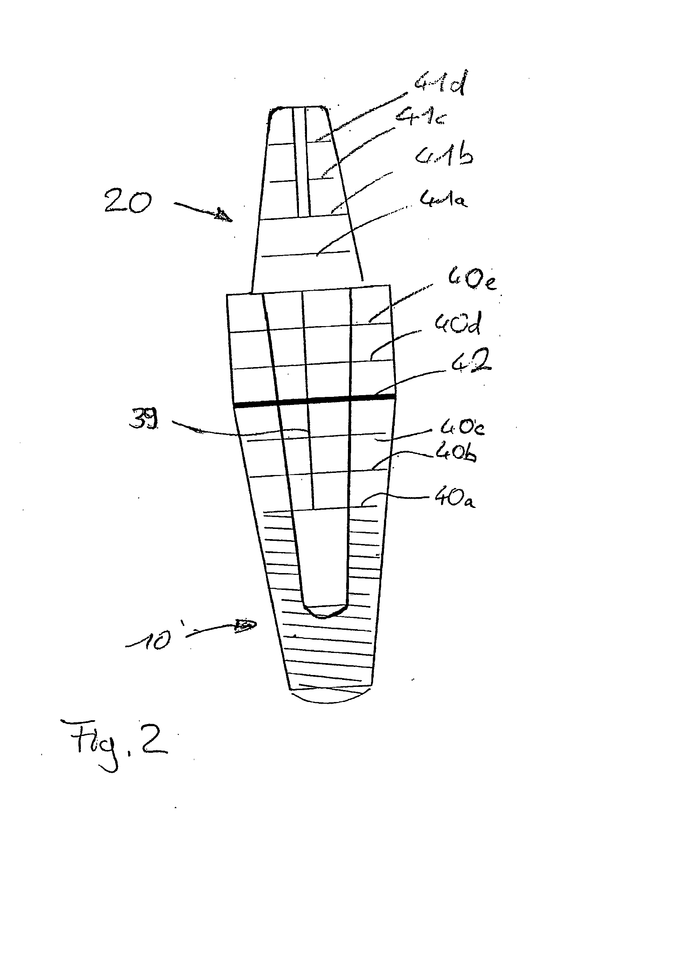

Bezugnehmend zu Figur 2 ist ein Gewebeverankerungsteil 10 mit daran befestigtem Zahnaufbauteil 20 im montierten Zustand gezeigt. Figur 2 zeigt weiterhin eine Rotationsmarkierung 39, Tiefenmarkierungen 40a-e, Höhenmarkierungen 41a-d sowie eine differenzierte Markierung 42 der Nulllinie 34. Gegenüberliegend zur Rotationsmarkierung 39 ist eine weiteren Rotationsmarkierung (nicht sichtbar) um 180° versetzt angeordnet.

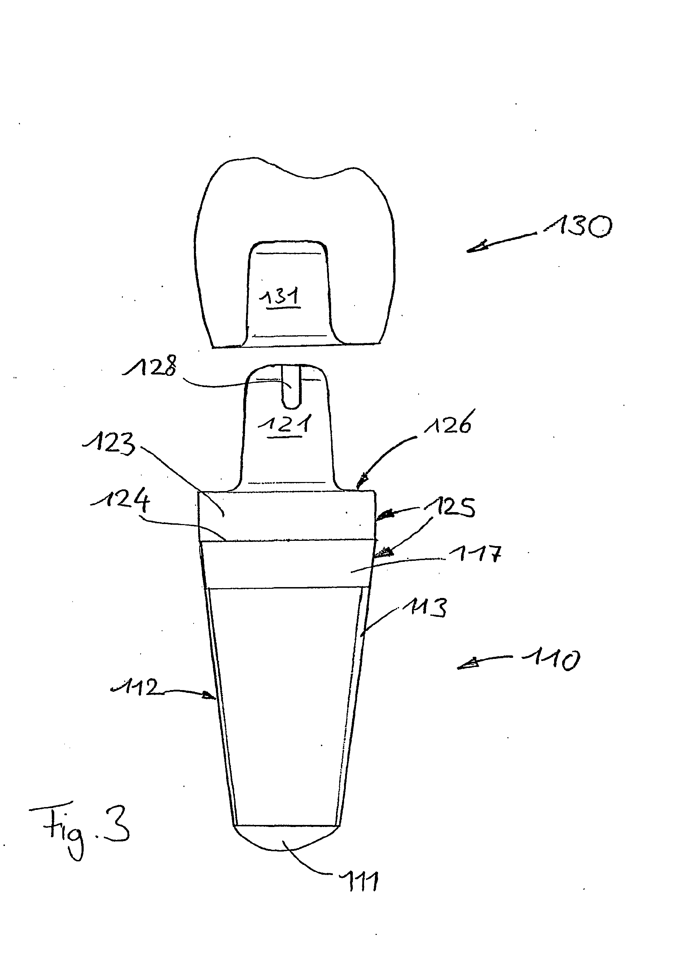

Figur 3 zeigt eine weitere Ausführungsform eines Zahnimplantats nicht gemäß der Erfindung. Die dargestellte Ausführungsform umfasst einen einteiligen Gewebeverankerungsteil 110 mit einer verrundeten Spitze 111 und einem Außengewinde 113, die in gleicher Weise aufgebaut sind, wie die zuvor beschriebene verrundete Spitze 11 und das Außengewinde 13.

An dem Gewebeverankerungsteil schließt sich einstückig ein konischer Flächenabschnitt 117 an, der sich vom Gewinde 113 bis zu einer Nulllinie 124 erstreckt und dessen Außenfläche als Mischgewebsanlagerungszone 125 zur Anlagerung eines Mischgewebes aus Knochen- und Bindegewebe dient.

Oberhalb der Nulllinie 124 weist das Gewebeverankerungsteil 110 einen zylindrischen Bereich 123 auf, der sich bis zu einer ringförmigen, axialen Stirnfläche 126 erstreckt und dessen Außenfläche ebenfalls als Mischgewebsanlagerungszone 125 zur Anlagerung des Bindegewebes dient.

An der Stirnfläche 126 ist ein Zapfen 121 ausgebildet, der sich von der Stirnfläche 126 ausgehend in Längsrichtung des Implantats erstreckt.

Das in Figur 3 gezeigte einteilige Zahnimplantat umfasst weiterhin eine Krone 130 mit einer darin ausgebildeten Vertiefung 131, die geometrisch kongruent zum Zapfen 121 ausgebildet ist und zur zementierten Befestigung der Krone 130 am Zapfen 121 angepasst ist. Auch hier ist eine Anpassung der Krone durch Zahnarzt oder Zahntechniker, wie in Fig. 1 beschrieben, erforderlich.

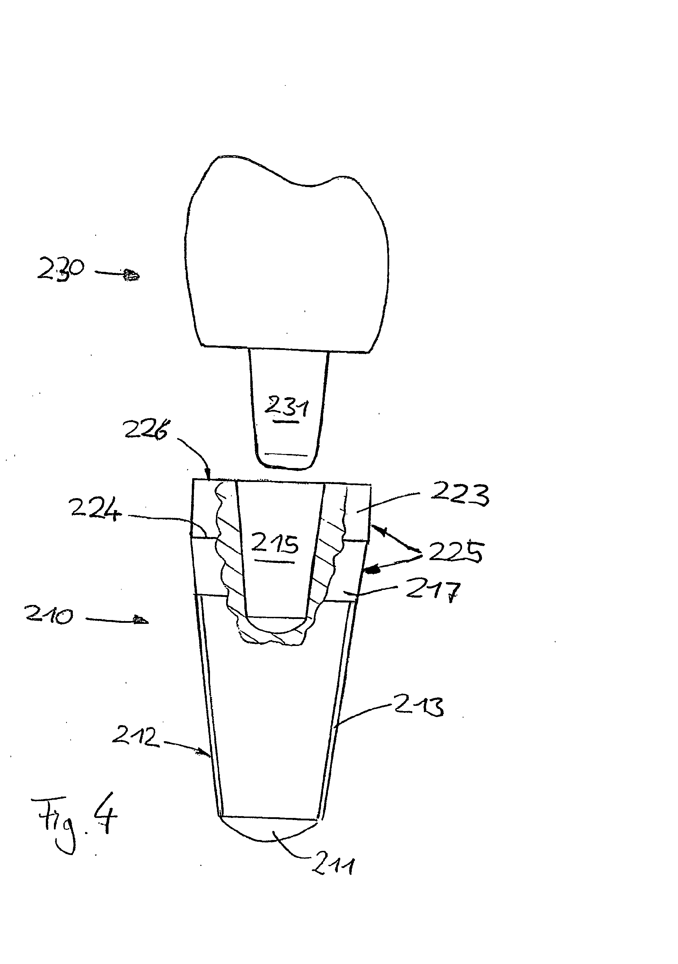

Figur 4 zeigt eine weitere Ausführungsform eines Zahnimplantats nicht gemäß der Erfindung. Die dargestellte Ausführungsform umfasst einen einteiligen Gewebeverankerungsteil 210 mit einer verrundeten Spitze 211 und einer Außenfläche 212 mit Außengewinde 213, die in gleicher Weise aufgebaut sind, wie die zuvor beschriebene verrundete Spitze 11 und das Außengewinde 13.

An dem Gewebeverankerungsteil schließt sich einstückig ein konischer Flächenabschnitt 217 an, der sich vom Gewinde 213 bis zu einer Nulllinie 224 erstreckt und als Mischgewebsanlagerungszone 225 für ein Mischgewebe aus Knochenund Bindegewebe dient.

Oberhalb der Nulllinie 224 weist das Gewebeverankerungsteil 210 einen zylindrischen Bereich 223 auf, der sich bis zu einer ringförmigen, axialen Stirnfläche 226 erstreckt und dessen Außenfläche als Bindegewebsanlagerungszone für das Bindegewebe dient.

In der Stirnfläche 226 ist ein Schwertschaft 215 ausgebildet, der sich von der Stirnfläche 226 ausgehend in Richtung der verrundeten Spitze 211 erstreckt und in gleicher Weise ausgebildet ist, wie der zuvor beschriebene Schwertschaft 15.

Das in Figur 4 gezeigte einteilige Zahnimplantat umfasst weiterhin eine Krone 230 mit einem daran einstückig ausgebildeten Schwert 231, welches geometrisch kongruent zum Schwertschacht 215 ausgebildet ist und zur zementierten Befestigung der Krone 230 im Schwertschacht 215 angepasst ist. Auch hier ist eine Anpassung der Krone durch Zahnarzt oder Zahntechniker, wie in Fig. 1 beschrieben, erforderlich.

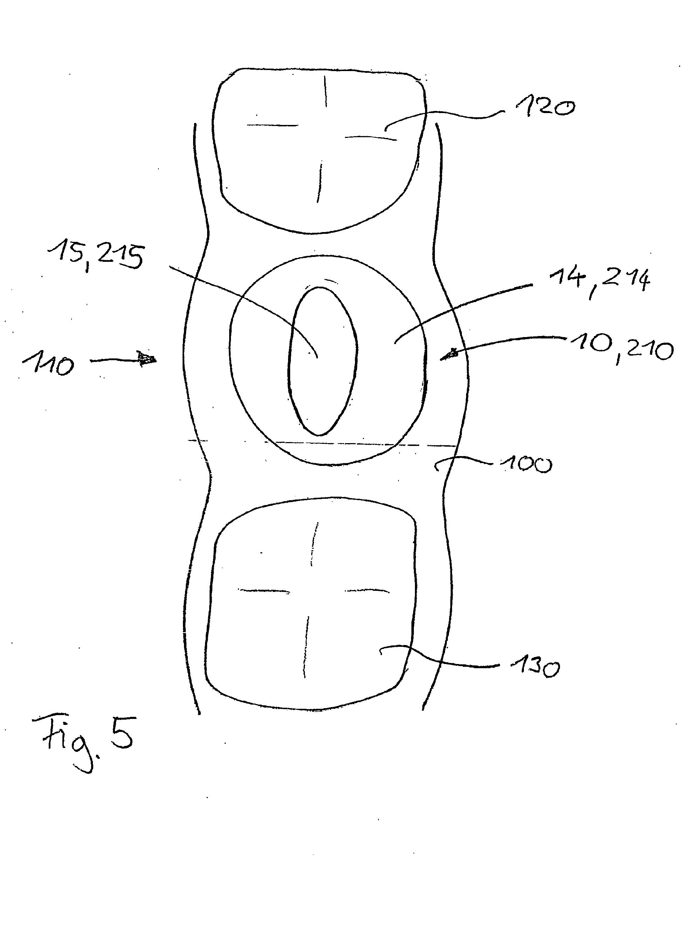

Figur 5 zeigt einen Ausschnitt eines Kieferknochens 100 mit einer Zahnlücke 110 und benachbart zu der Zahnlücke 110 angeordneten Zähnen 120, 130. In der Zahnlücke 110 ist ein Gewebeverankerungsteil 10 verankert und man erkennt in der Draufsicht die ringförmige axiale Stirnfläche 14. In der Stirnfläche 14 ist ein Schwertschaft 15 mit ovalem Querschnitt ausgebildet. Die längere der beiden ovalen Achsen erstreckt sich in Richtung der beiden benachbarten Zähne 120, 130, während die kürzere der beiden Ellipsenachsen senkrecht dazu ausgerichtet ist und sich von der Mundhöhlenseite zur Backenseite hin erstreckt.

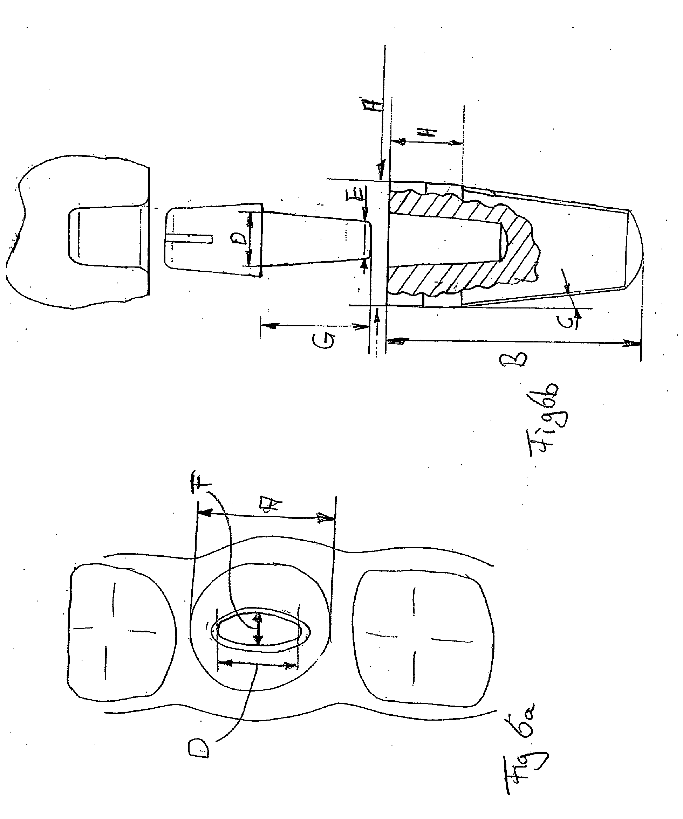

Das erfindungsgemäße Implantat wird vorzugsweise in verschiedenen Größenabmessungen bereitgestellt, um einerseits an die jeweils unterschiedlichen anatomischen Verhältnisse bei Zahnersatz von Schneidzähnen, Eckzähnen oder Backenzähnen angepasst und ausgewählt werden zu können und andererseits an die unterschiedlichen anatomischen Verhältnisse in Abhängigkeit der jeweiligen Kieferknochengröße des Patienten angepasst ausgewählt zu werden. Die nachfolgende Tabelle zeigt mit Bezug auf Figur 6a, b bevorzugte Abmessungen des Implantats für unterschiedliche Größen der Implantatserie.

| Implantatdurchmesser A | Implantat-länge B | Konuswinkel unterhalb der Nulllinie C | Schwertbreite oben D | Schwertbreite unten E | Schwert -dicke F | Schwert -länge G | Länge des gewindefreien Abschnitts H |
|---|---|---|---|---|---|---|---|
| 3,5 | 11, 13, 15, 17 | 2 | 2 | 1,2 | 1,2 | 9 | 6 |
| 4 | 11, 13, 15, 17 | 3 | 2 | 1,2 | 1,2 | 9 | 6 |
| 5 | 11, 13, 15, 17 | 5 | 3 | 1,8 | 1,8 | 9 | 6 |
| 6 | 11, 13, 15, 17 | 5 | 3 | 1,8 | 1,8 | 9 | 6 |
| 7 | 11, 13, 15,17 | 5 | 3 | 1,8 | 1,8 | 9 | 6 |

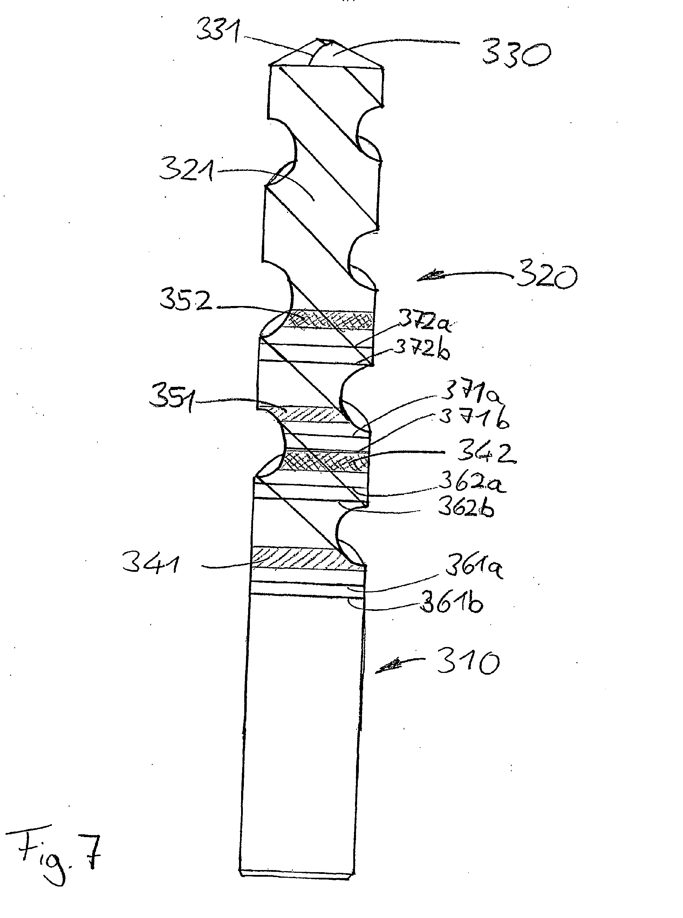

Fig. 7 zeigt einen Knochenbohrer mit einem Aufnahmeabschnitt 310 zur Befestigung des Bohrers in einem Bohrwerkzeug, einem Bohrabschnitt 320 mit Spanabfuhrkanälen 321 und einer Bohrspitze 330 mit Schneidkanten 331.

Der Bohrer weist im Bereich des Aufnahmeabschnitts und des Bohrabschnitts eine rote Markierung 341 für eine erste Implantatlänge und eine weiße Markierung 342 für dieselbe Implantatlänge auf.

Mittels der Markierung 341 kann die richtige Bohrtiefe eingestellt werden, indem so tief gebohrt wird, dass die rote Markierung 341 mit der Zahnfleischoberfläche fluchtet.

Mittels der Markierung 342 kann die richtige Bohrtiefe eingestellt werden, indem so tief gebohrt wird, dass die weiße Markierung 342 mit der Knochenoberfläche fluchtet.

Weiterhin weist der Bohrer eine weitere rote Markierung 351 und eine weitere weiße Markierung 352 auf, mit denen in analoger Weise die richtige Bohrtiefe für eine zweite, kürzere Implantatlänge eingestellt werden kann.

Schließlich weist der Bohrer noch weitere, schwarze Markierungen 361 a,b, 362a,b, 371a,b und 372a,b auf, von denen jeweils zwei einer jeden weißen und roten Markierung zugeordnet sind. Diese Markierungen erlauben es, die Bohrung gezielt eine geringe Distanz tiefer zu setzen als durch die weißen und roten Markierungen vorgesehen, um so die Gefahr einer zu kurzen Bohrung zu vermeiden.

## Patentansprüche

1. Zahnimplantat, mit
- einem im Kieferknochen verankerbaren Knochenverankerungsteil (10) mit einer mit einem Gewinde versehenen Außenfläche (13) zur Verankerung im Kieferknochen,
- einem an dem Knochenverankerungsteil befestigbaren Zahnaufbauteil (20), an dem eine Krone (30) befestigbar ist, wobei
das Knochenverankerungsteil als Gewebeverankerungsteil ausgebildet ist und das Gewerbeverankerungsteil und das Zahnaufbauteil durch Präparation durch den Zahnarzt an den individuellen Zahnfleischverlauf anzupassen sind,
das Knochenverankerungsteil und das Zahnaufbauteil (20) mittels eines sich in Längsrichtung des einen Teils erstreckenden Schaftes (15), in den ein am anderen Teil ausgebildetes Schwert (21) einsetzbar ist, miteinander verbindbar sind,
das Gewebeverankerungsteil und das Zahnaufbauteil durch zementierte Verankerung des Schwertes (21) in dem Schaft (15) miteinander verbindbar sind, und
der Schaft am Gewebeverankerungsteil und das Schwert am Zahnaufbauteil ausgebildet sind, und das Zahnimplantat eine erste Verdrehsicherung zur rotationsgesicherten Befestigung des Zahnaufbauteils an den Gewebeverankerungsteil aufweist,
**dadurch gekennzeichnet, dass** das Knochenverankerungsteil und das Zahnaufbauteil (20) aus einem keramischen Material bestehen und weiterhin **gekennzeichnet durch** mindestens eine zweite Verdrehsicherung (28) zur rotationsgesicherten Befestigung der Krone an den Zahnaufbauteil und **durch** eine am Gewebeverankerungsteil ausgebildete Kronenrandaufnahmefläche (14), welche ausgebildet ist, um die in die Krone (30) eingeleiteten Kaukräfte auf das Gewebeverankerungsteil weiterzuleiten.

2. Zahnimplantat nach Anspruch 1,
**dadurch gekennzeichnet, dass** das Gewebeverankerungsteil und das Zahnaufbauteil so ausgebildet sind, dass zumindest ein außenseitiger Abschnitt des Übergangs (14, 22) zwischen Gewebeverankerungsteil und Zahnaufbauteil im implantierten Zustand äqui- und/oder supragingival liegt.

3. Zahnimplantat nach Anspruch 1 oder 2,
**dadurch gekennzeichnet, dass** das Gewebeverankerungsteil und das Zahnaufbauteil so ausgebildet sind, dass der linguale und/oder der bukkale Abschnitt des außenseitigen Übergangs (14, 22) zwischen Gewebeveran-kerungstell und Zahnaufbauteil im implantierten Zustand äqui- und/oder supragingival Ilegt.

4. Zahnimplantat nach einem der vorhergehenden Ansprüche,
**dadurch gekennzeichnet, dass** das Gewebeverankerungsteil und das Zahnaufbauteil so ausgebildet sind, dass der zu den Nachbarzähnen weisende Abschnitt des außenseitigen Übergangs (14, 22) zwischen Gewebeverankerungsteil und Zahnaufbauteil im implantierten Zustand äquiund/oder supragingival liegt.

5. Zahnimplantat nach Anspruch 1,
**dadurch gekennzeichnet, dass** das Gewebeverankerungsteil und das Zahnaufbauteil so ausgebildet sind, dass der gesamte außenseltige Übergang (14, 22) zwischen Gewebeverankerungsteil und Zahnaufbauteil im implantierten Zustand äqui- und/oder supragingival liegt

6. Zahnimplantat nach einem der vorhergehenden Ansprüche,
**dadurch gekennzeichnet, dass** die Kronenrandaufnahmefläche (14) ringförmig entlang des Umfangs des Zahnaufbauteils bzw. des Gewebeverankerungsteils ausgebildet ist und in axialer Richtung zum Mundraum weist.

7. Zahnimplantat nach einem der vorhergehenden Ansprüche,
**dadurch gekennzeichnet, dass** die Kronenrandaufnahmefläche (14) zumindest teilweise, vorzugsweise vollständig im implantierten Zustand äquiund/oder supragingival liegt.

8. Zahnimplantat nach einem der vorhergehenden Ansprüche,
**dadurch gekennzeichnet, dass** die Kronenrandaufnahmefläche (14) mit dem außenseitigen Übergang (14, 22) zwischen Gewebeverankerungsteil und Zahnaufbauteil auf einer Höhe liegt.

9. Zahnimplantat nach einem der vorangehenden Ansprüche,
**dadurch gekennzeichnet, dass** der Schaft (15) in einer Querschnittsebene senkrecht zu seiner Erstreckung einen von einem kreisrunden Querschnitt abweichenden Querschnitt aufweist, vorzugsweise einen ellipsenförmigen Querschnitt.

10. Zahnimplantat nach Anspruch 9,
**dadurch gekennzeichnet, dass** der Schaft (15) in der Querschnittsebene in einer ersten Richtung, die sich im implantierten Zustand zwischen den beidseitigen Nachbarzähnen des Implantats erstreckt, eine größere Abmessung hat als in einer senkrecht dazu gelegenen zweiten Richtung, die sich in einer bukko-lingualen Richtung erstreckt.

11. Zahnimplantat nach einem der vorhergehenden Ansprüche,
**dadurch gekennzeichnet, dass** das Knochenverankerungsteil (10; 110; 210) und gegebenenfalls das Zahnaufbauteil (20; 120; 220) aus Zirkonoxid, bestehen.

12. Zahnimplantat nach einem der vorhergehenden Ansprüche,
**dadurch gekennzeichnet, dass** das Zahnaufbauteil
- ein erstes Verankerungsteil mit
- einem Befestigungsmittel zur Befestigung am Knochenverankerungsteil und mit
- einer Befestigungsfläche zur Befestigung einer modellierbaren Masse, und
- ein zweites Teil umfasst, das durch Befestigung, Modellierung und Aushärtung einer vom Zahnarzt oder Zahntechniker plastisch verformbaren, modellierbaren Masse an der Befestigungsfläche herstellbar ist.

13. Zahnimplantat nach einem der vorhergehenden Ansprüche, **dadurch gekennzeichnet, dass** am Gewebeverankerungsteil und/oder am Zahnaufbauteil ein für die Anlagerung von Zahnfleischgewebe ausgebildeter Bindegewebsabschnitt (25; 125; 225) bereitgestellt ist, der eine Oberflächenstruktur aufweist, die die Bindegewebsintegration möglich macht und/oder fördert.

14. Zahnimplantat nach Anspruch 13,
**dadurch gekennzeichnet, dass** der Bindegewebsabschnitt nicht mit einer die primäre Knochenverankerung fördernden Makrostruktur versehen ist.

15. Zahnimplantat nach Anspruch 13 oder 14,
**dadurch gekennzeichnet, dass** der Bindegewebsabschnitt eine etwa zylindrische oder sich konisch verjüngende Außenfläche aufweist.

16. Zahnimplantat nach einem der vorhergehenden Ansprüche 13 bis 15,
**dadurch gekennzeichnet, dass** der Bindegewebsabschnitt eine aufgerauhte Oberflächenstruktur aufweist.

17. Zahnimplantat nach einem der vorhergehenden Ansprüche,
**gekennzeichnet durch** mindestens eine Rotationsmarkierung (39, 28) an dem Gewebeverankerungsteil und/oder gegebenenfalls an dem Zahnaufbauteil, die während des Implantations- und Behandlungsvorgangs eine Beurteilung der Rotationsausrichtung des Gewebeverankerungsteils bzw. des Zahnaufbauteils um die Implantatlängsachse ermöglicht.

18. Zahnimplantat nach einem der vorhergehenden Ansprüche,
**gekennzeichnet durch** mindestens eine Tiefenmarkierung (24, 124, 224) an dem Gewebeverankerungsteil und/oder gegebenenfalls an dem Zahnaufbauteil, die während des Implantationsvorgangs eine Beurteilung der Implantationstiefe des Gewebeverankerungsteils ermöglicht.

19. Zahnimplantat nach Anspruch 18,
**gekennzeichnet durch** mehrere voneinander beabstandete Tiefenmarkierungen (40a-e, 42) an dem Gewebeverankerungsteil und/oder gegebenenfalls an dem Zahnaufbauteil, von denen eine Tiefenmarkierung (42) unterschiedlich zu den anderen Tiefenmarkierungen (40a-e) ausgebildet ist und diese Tiefenmarkierung die Nulllinie des Implantats kennzeichnet.

20. Zahnimplantat nach einem der vorhergehenden Ansprüche,
**gekennzeichnet durch** mindestens eine Höhenmarkierung (41a-d) an dem Zahnaufbauteil, die eine Beurteilung der Aufbauhöhe des Zahnaufbauteils ermöglicht.

21. Zahnimplantat nach einem der vorhergehenden Ansprüche,
**dadurch gekennzeichnet, dass** das Gewebeverankerungsteil und/oder gegebenenfalls das Zahnaufbauteil aus einem Material, insbesondere aus Zirkonoxid, besteht/bestehen welches eine spanende und/oder schleifende Bearbeitung mit dem Instrumentarium erlaubt, das auch zur Präparation von Zähnen in der zahnärztlichen Therapie benutzt wird.

22. Zahnimplantat nach einem der vorhergehenden Ansprüche,
**dadurch gekennzeichnet, dass** das Gewebeverankerungsteil und/oder gegebenenfalls das Zahnaufbauteil aus einem Material, insbesondere aus Zirkonoxid, besteht/bestehen, welches eine spanende und/oder schleifende Bearbeitung mit dem Instrumentarium erlaubt, das auch zur Bearbeitung von Zahnersatz in zahnärztlichen Laboren benutzt wird.

## Claims

1. A dental implant with
- a bone-anchoring part (10) capable of being anchored in the jaw bone and with an outer face (13) provided with a thread for anchoring in the jaw bone,
- a tooth attachment part (20) which is capable of being fastened to the bone-anchoring part and to which a crown (30) is capable of being fastened,
wherein
the bone-anchoring part is designed in the form of a tissue-anchoring part, and the tissue-anchoring part and the tooth attachment part are to be adapted to the individual gum contour by preparation by the dentist,
the bone-anchoring part and the tooth attachment part (20) are capable of being connected to each other by means of a socket (15) which extends in the longitudinal direction of one part and into which a blade (21) formed on the other part is capable of being inserted,
the tissue-anchoring part and the tooth attachment part are capable of being connected to each other by a cemented anchoring of the blade (21) in the socket (15), and
the socket is formed on the tissue-anchoring part and the blade on the tooth attachment part, and
the dental implant has a first anti-twist means for the rotation-proof fastening of the tooth attachment part on the tissue-anchoring part,
**characterized in that** the bone-anchoring part and the tooth attachment part (20) consist of a ceramic material, and further **characterized by** at least one second antitwist means (28) for the rotation-proof fastening of the crown on the tooth attachment part and by a crown margin reception face (14) which is formed on the tissueanchoring part and which is designed in order to transmit the chewing forces introduced into the crown (30) to the tissue-anchoring part.

2. A dental implant according to claim 1, **characterized in that** the tissue-anchoring part and the tooth attachment part are designed in such a way that at least one exterior portion of the transition (14, 22) between the tissueanchoring part and the tooth attachment part is situated equigingivally and/or supragingivally in the implanted state.

3. A dental implant according to claim 1 or 2, **characterized in that** the tissue-anchoring part and the tooth attachment part are designed in such a way that the lingual and/or the buccal portion of the exterior transition (14, 22) between the tissue-anchoring part and the tooth attachment part is situated equigingivally and/or supragingivally in the implanted state.

4. A dental implant according to any one of the preceding claims, **characterized in that** the tissue-anchoring part and the tooth attachment part are designed in such a way that the portion of the exterior transition (14, 22) - facing the adjacent teeth - between the tissue-anchoring part and the tooth attachment part is situated equigingivally and/or supragingivally in the implanted state.

5. A dental implant according to claim 1, **characterized in that** the tissue-anchoring part and the tooth attachment part are designed in such a way that the entire exterior transition (14, 22) between the tissue-anchoring part and the tooth attachment part is situated equigingivally and/or supragingivally in the implanted state.

6. A dental implant according to any one of the preceding claims, **characterized in that** the crown margin reception face (14) is formed in an annular manner along the periphery of the tooth attachment part and of the tissueanchoring part respectively and faces towards the oral cavity in the axial direction.

7. A dental implant according to any one of the preceding claims, **characterized in that** the crown margin reception face (14) is situated equigingivally and/or supragingivally in the implanted state at least in part and preferably completely.

8. A dental implant according to any one of the preceding claims, **characterized in that** the crown margin reception face (14) is situated at one level with the exterior transition (14, 22) between the tissue-anchoring part and the tooth attachment part.

9. A dental implant according to any one of the preceding claims, **characterized in that** in a cross-sectional plane at a right angle to the extension of the socket (15) the latter has a cross-section, preferably an elliptical cross-section, differing from a circular cross-section.

10. A dental implant according to claim 9, **characterized in that**, in the cross-sectional plane in a first direction which in the implanted state extends between the adjacent teeth of the implant on both sides, the socket (15) has a larger dimension than in a second direction which is situated at a right angle thereto and which extends in a bucco-lingual direction.

11. A dental implant according to any one of the preceding claims, **characterized in that** the bone-anchoring part (10; 110; 210) and optionally the tooth attachment part (20; 120; 220) consists or consist of zirconium oxide.

12. A dental implant according to any one of the preceding claims, **characterized in that** the tooth attachment part comprises
- a first anchoring part with
- a fastening means for fastening to the bone-anchoring part and with
- a fastening face for fastening a compound capable of being moulded, and
- a second part which is capable of being produced on the fastening face by the fastening, moulding and curing of a compound capable of being deformed by the dentist or dental technician and capable of being moulded.

13. A dental implant according to any one of the preceding claims, **characterized in that** a connective tissue portion (25; 125; 225), which is designed for the attachment of gingival tissue and which has a surface structure which makes possible and/or promotes the integration of the connective tissue, is provided on the tissue-anchoring part and/or on the tooth attachment part.

14. A dental implant according to claim 13, **characterized in that** the connective tissue portion is not provided with a macrostructure promoting the primary bone anchoring.

15. A dental implant according to claim 13 or 14, **characterized in that** the connective tissue portion has an external face which is substantially cylindrical or which tapers conically.

16. A dental implant according to any one of the preceding claims 13 to 15, **characterized in that** the connective tissue portion has a roughened surface texture.

17. A dental implant according to any one of the preceding claims, **characterized by** at least one rotation marking (39, 28) on the tissue-anchoring part and/or optionally on the tooth attachment part, which rotation marking (39, 28) allows the orientation of rotation of the tissue-anchoring part and the tooth attachment part respectively about the longitudinal axis of the implant to be evaluated during the implantation and treatment procedure.

18. A dental implant according to any one of the preceding claims, **characterized by** at least one depth marking (24, 124, 224) on the tissue-anchoring part and/or optionally on the tooth attachment part, which depth marking (24, 124, 224) allows the depth of implantation of the tissueanchoring part to be evaluated during the implantation procedure.

19. A dental implant according to claim 18, **characterized by** a plurality of depth markings (40a-e, 42) arranged at a distance from one another on the tissue-anchoring part and/or optionally on the tooth attachment part, one depth marking (42) of which is formed differently from the other depth markings (40a-e) and this depth marking characterizes the zero line of the implant.

20. A dental implant according to any one of the preceding claims, **characterized by** at least one height marking (41a-d) on the tooth attachment part, which height marking (41a-d) allows the attachment height of the tooth attachment part to be evaluated.

21. A dental implant according to any one of the preceding claims, **characterized in that** the tissue-anchoring part and/or optionally the tooth attachment part consists or consist of a material, in particular of zirconium oxide, which allows a cutting and/or grinding treatment with the set of instruments which is also used for the preparation of teeth in dental therapy.

22. A dental implant according to any one of the preceding claims, **characterized in that** the tissue-anchoring part and/or optionally the tooth attachment part consists or consist of a material, in particular of zirconium oxide, which allows a cutting and/or grinding treatment with the set of instruments which is also used for the treatment of dental prostheses in dental laboratories.

## Revendications

1. Implant dentaire, comportant
- une partie d'ancrage osseux (10) pouvant être ancrée dans l'os de la mâchoire comportant une surface externe (13) dotée d'un filetage pour ancrage dans l'os de la mâchoire,
- une partie de montage de dent (20) pouvant être fixée à la partie d'ancrage osseux à laquelle une couronne (30) peut être fixée,
dans lequel
la partie d'ancrage osseux est conçue comme une partie d'ancrage tissulaire et la partie d'ancrage tissulaire et la partie de montage de dent doivent s'ajuster par préparation par le dentiste au contour individuel de la gencive,
la partie d'ancrage osseux et la partie de montage de dent (20) sont reliées l'une à l'autre au moyen d'une tige (15) s'étendant dans la direction longitudinale d'une partie dans laquelle un éperon (21) formé sur l'autre partie peut être inséré,
la partie d'ancrage tissulaire et la partie de montage de dent peuvent être reliées l'une à l'autre par ancrage cimenté de l'éperon (21) dans la tige (15) et
la tige est formée sur la partie d'ancrage tissulaire et l'éperon est formé sur la partie de montage de dent, et
l'implant dentaire présente une première sécurité anti-rotation pour la fixation empêchant une rotation de la partie de montage de dent sur la partie d'ancrage tissulaire,
**caractérisé en ce que** la partie d'ancrage osseux et la partie de montage de dent (20) sont constituées d'un matériau céramique, et **caractérisé en outre par** au moins une deuxième sécurité anti-rotation (28) pour la fixation empêchant une rotation de la couronne sur la partie de montage de dent et par une surface de réception du bord de couronne (14) formée sur la partie d'ancrage tissulaire qui est conçue pour transmettre les forces de mastication engagées dans la couronne (30) sur la partie d'ancrage tissulaire.

2. Implant dentaire selon la revendication 1,
**caractérisé en ce que** la partie d'ancrage tissulaire et la partie de montage de dent sont conçues de sorte qu'au moins un segment côté extérieur de la transition (14, 22) entre la partie d'ancrage tissulaire et la partie de montage de dent se situe, à l'état implanté, sur le plan équi-gingival et/ou supra-gingival.

3. Implant dentaire selon la revendication 1 ou 2,
**caractérisé en ce que** la partie d'ancrage tissulaire et la partie de montage de dent sont conçues de telle sorte que le segment lingual et/ou vestibulaire de la transition (14, 22) côté extérieur entre la partie d'ancrage tissulaire et la partie de montage de dent se situe, à l'état implanté, sur le plan équi-gingival et/ou supra-gingival.

4. Implant selon l'une des revendications précédentes,
**caractérisé en ce que** la partie d'ancrage tissulaire et la partie de montage de dent sont conçues de telle sorte que le segment tourné vers les dents voisines de la transition (14, 22) côté extérieur entre la partie d'ancrage tissulaire et la partie de montage de dent se situe, à l'état implanté, sur le plan équi-gingival et/ou supragingival.

5. Implant dentaire selon la revendication 1,
**caractérisé en ce que** la partie d'ancrage tissulaire et la partie de montage de dent sont conçues de telle sorte que la transition (14, 22) côté extérieur complète entre la partie d'ancrage tissulaire et la partie de montage de dent se situe, à l'état implanté, sur le plan équi-gingival et/ou supra-gingival.

6. Implant dentaire selon l'une des revendications précédentes,
**caractérisé en ce que** la surface de réception du bord de couronne (14) est formée de façon circulaire le long du pourtour de la partie de montage de dent ou de la partie d'ancrage tissulaire et est orientée dans la direction axiale vers la cavité buccale.

7. Implant dentaire selon l'une des revendications précédentes,
**caractérisé en ce que** la surface de réception du bord de couronne (14) se situe au moins partiellement, de préférence complètement, à l'état implanté, sur le plan équigingival et/ou supra-gingival.

8. Implant dentaire selon l'une des revendications précédentes,
**caractérisé en ce que** surface de réception du bord de couronne (14) avec la transition (14, 22) côté extérieur entre la partie d'ancrage tissulaire et la partie de montage de dent se situe sur une hauteur.

9. Implant dentaire selon l'une des revendications précédentes,
**caractérisé en ce que** la tige (15) présente dans un plan de section perpendiculaire à son prolongement, une section différente d'une section arrondie, de préférence une section elliptique.

10. Implant dentaire selon la revendication 9,
**caractérisé en ce que** la tige (15) dans le plan de section dans une première direction, qui s'étend à l'état implanté entre les dents voisines, des deux côtés, de l'implant, a une dimension supérieure à celle dans une deuxième direction perpendiculaire à celle-ci qui s'étend dans une direction vestibulo-linguale.

11. Implant dentaire selon l'une des revendications précédentes,
**caractérisé en ce que** la partie d'ancrage osseux (10 ; 110 ; 210) et éventuellement la partie de montage de dent (20 ; 120 ; 220) sont en oxyde de zirconium.

12. Implant dentaire selon l'une des revendications précédentes,
**caractérisé en ce que** la partie de montage de dent comprend
- une première partie d'ancrage avec
- un élément de fixation pour la fixation sur la partie d'ancrage osseux et avec
- une surface de fixation pour la fixation d'une masse modélisable, et
- une deuxième partie qui peut être produite par fixation, modélisation et durcissement d'une masse modélisable, déformable plastiquement, par le dentiste ou le technicien dentaire, sur la surface de fixation.

13. Implant dentaire selon l'une des revendications précédentes,
**caractérisé en ce que** sur la partie d'ancrage tissulaire et/ou sur la partie de montage de dent est mis à disposition un segment de tissu conjonctif (25 ; 125 ; 225) conçu pour l'accumulation de tissu gingival, qui présente une structure superficielle qui permet et/ou favorise l'intégration de tissu conjonctif.

14. Implant dentaire selon la revendication 13,
**caractérisé en ce que** le segment de tissu conjonctif n'est pas doté d'une macrostructure favorisant l'ancrage osseux primaire.

15. Implant dentaire selon la revendication 13 ou 14.
**caractérisé en ce que** le segment de tissu conjonctif présente une surface externe à peu près cylindrique ou se réduisant coniquement.

16. Implant dentaire selon l'une des revendications 13 à 15 précédentes,
**caractérisé en ce que** le segment de tissu conjonctif présente une structure superficielle rugueuse.

17. Implant dentaire selon l'une des revendications précédentes,
**caractérisé par** au moins un marquage de rotation (39, 28) sur la partie d'ancrage tissulaire et/ou éventuellement sur la partie de montage de dent qui permet, pendant le processus d'implantation et de traitement, une évaluation de la direction de rotation de la partie d'ancrage tissulaire ou de la partie de montage de dent autour de l'axe d'implantation.

18. Implant dentaire selon l'une des revendications précédentes,
**caractérisé par** au moins un marquage de profondeur (24, 124, 224) sur la partie d'ancrage tissulaire et/ou éventuellement sur la partie de montage de dent qui permet, pendant le processus d'implantation, une évaluation de la profondeur d'implantation de la partie d'ancrage tissulaire.

19. Implant dentaire selon la revendication 18,
**caractérisé par** plusieurs marquages de profondeur distants les uns des autres (40a-e, 42) sur la partie d'ancrage tissulaire et/ou éventuellement sur la partie de montage de dent, parmi lesquels un marquage de la profondeur (42) est conçu différemment des autres marquages de profondeur (40a-e) et ce marquage de profondeur caractérise la ligne zéro de l'implant.

20. Implant dentaire selon l'une des revendications précédentes,
**caractérisé par** au moins un marquage de hauteur (41a-d) sur la partie de montage de dent qui permet une évaluation de la hauteur de montage de la partie de montage de dent.

21. Implant dentaire selon l'une des revendications précédentes,
**caractérisé en ce que** la partie d'ancrage tissulaire et/ou éventuellement la partie de montage de dent consiste(nt) en un matériau, en particulier en oxyde de zirconium, qui permet un usinage par enlèvement de copeaux et/ou un usinage par abrasion avec l'ensemble d'instruments qui est également utilisé pour la préparation des dents dans le traitement de dentisterie.

22. Implant dentaire selon l'une des revendications précédentes,
**caractérisé en ce que** la partie d'ancrage tissulaire et/ou éventuellement la partie de montage de dent consiste(nt) en un matériau, en particulier en oxyde de zirconium, qui permet un usinage par enlèvement de copeaux et/ou par abrasion avec l'ensemble d'instruments qui est également utilisé pour l'usinage des prothèses dentaires dans les laboratoires de dentisterie.
